# EUROPÄISCHE PATENTSCHRIFT

(11) **EP 1 910 983 B1**
(45) Veröffentlichungstag und Bekanntmachung des Hinweises auf die Patenterteilung: **18.04.2012**
(21) Anmeldenummer: 06754084.9
(22) Anmeldetag: 02.06.2006
(51) Int. Cl.: G06K 19/077, G09F 3/04, B44C 1/10, B29C 45/14, B29C 45/16, B65D 51/00

(54) **Gespritzter Gegenstand aus Kunststoff und Verfahren zu dessen Herstellung**
Injection moulded plastic article and method for producing the same
Article plastique moulé par injection et mode de réalisation associé

(30) Priorität: 02.08.2005 DE 102005036258
(43) Veröffentlichungstag der Anmeldung: 16.04.2008
(73) Patentinhaber: Chappuis, Pierre, 3073 Gümligen (CH)
(72) Erfinder: STALDER, Otto, CH-3182 Überstorf (CH)
(74) Vertreter: Rupp, Christian
(86) Internationale Anmeldenummer: PCT/EP2006/005289
(87) Internationale Veröffentlichungsnummer: WO 2007/014588

(56) Entgegenhaltungen:
- EP-A- 0 894 600
- EP-A- 1 457 301
- WO-A-01/00493
- DE-A1- 4 121 599
- DE-A1- 10 220 502
- DE-A1- 19 854 664
- US-A1- 2003 148 055
- US-A1- 2003 235 027
- US-A1- 2004 094 949
- US-A1- 2004 238 623
- US-B1- 6 206 292

## Beschreibung

Die Erfindung betrifft einen gespritzten Gegenstand aus Kunststoff, aufweisend eine mit dem Kunststoffmaterial des Gegenstands hinterspritzte Folie, sowie ein Verfahren zu dessen Herstellung.

Die bekannten Dekorfolien sind einfache bedruckte Folien, die zum Schutz der Farbe mit einer weiteren Schicht überzogen werden müssen. Um Gebrauchsgegenstände wie Getränkekästen oder Verschlussdeckel für Behälter, wie bspw. Flaschen, zu kennzeichnen konnten bisher entweder aufwändig mit Schutzschichten überzogene Folien hergestellt werden, oder teure Gravierungen verwendet werden, wobei diese nicht farbig möglich sind.

Die DE 102 20 502 A1 und die WO 01/00493 A1 zeigen ein Verfahren zum Herstellen eines (Getränke-)Kastens aus Kunststoff, wobei ein RFID-System mit einem Etikett als Trägerfolie verbunden wird und diese in eine Spritzform des Kastens eingelegt und mit dem Kasten bildenden Kunststoff hinterspritzt werden.

Dementsprechend ist es Aufgabe der Erfindung, in kostengünstiger und einfacher Weise gespritzte Gegenstände aus Kunststoff mit Folie und RFID-Modul zu versehen.

Diese Aufgabe wird durch die Merkmale der unabhängigen Ansprüche geschützt. Die abhängigen Ansprüche bilden den zentralen Gedanken der Erfindung in besonders vorteilhafter Weise weiter.

Die verwendeten Folien sind vorzugsweise rückseitig (also auf der von der Sichtseite abgewandten Seite) bedruckt, was eine zusätzliche Schutzschicht überflüssig macht, und können gleich beim Spritzgießen der zu überziehenden Gegenstände aufgebracht werden. Für das Aufbringen der Folien ist vorzugsweise kein Kleber notwendig, was gegenüber normalen Klebefolien eine Vereinfachung und Verbilligung darstellt. Gegenüber Gravierungen, die den hier beschriebenen Folien ähnliche Resistenz gegen mechanische Einflüsse bieten, sind die Folien preiswerter und hinsichtlich einer farbigen Gestaltung flexibler.

Gemäß einem ersten Aspekt der Erfindung wird ein gespritzter Gegenstand aus Kunststoff bereitgestellt, aufweisend eine mit dem Kunststoffmaterial des Gegenstands hinterspritzte Folie und ein zwischen der Folie und dem gespritzten Kunststoffmaterial des Gegenstands vorgesehenes RFID-Modul, wobei das RFID-Modul Antennen aufweist. Ferner ist die Folie gelocht. Das RFID-Modul weist zudem ein Loch auf. Das Loch des RFID-Moduls ist konzentrisch um das Loch der Folie angeordnet, so dass sich das Material für den Spritzgießvorgang durch das Loch der Folie und das Loch des RFID-Moduls hindurch einbringen ließ.

Gemäß einem zweiten Aspekt der Erfindung wird ein Verfahren zum Versehen eines gespritzten Gegenstands aus Kunststoff mit einer Folie und mit einem RFID-Modul bereitgestellt, wobei die Folie, die ein Loch aufweist, durch das die Düse beim Spritzgießvorgang hindurchfahren kann, in einen formgebenden Hohlraum eines Spritzgießwerkzeugs eingelegt und im Zuge des Spritzgießens des Gegenstands mit einer Oberfläche des entstehenden Gegenstands verbunden wird, und wobei durch den Spritzgießvorgang ein RFID-Modul mit Antennen, das ein Loch aufweist, durch das die Düse beim Spritzgießvorgang hindurchfahren kann, zwischen der Folie und dem Kunststoffmaterial des gespritzten Gegenstands eingebracht wird, wobei das Loch des RFID-Moduls konzentrisch um das Loch der Folie angeordnet ist, so dass das Kunststoffmaterial für den Spritzgießvorgang durch das Loch der Folie und das Loch des RFID-Moduls hindurch eingebracht wird, und die Folie und das RFID-Modul mit dem Kunststoffmaterial hinterspritzt wird.

Weitere Merkmale, Vorteile und Eigenschaften der Erfindung sollen nunmehr anhand von Ausführungsbeispielen und den Figuren der begleitenden Zeichnungen erläutert werden.
- Figuren 1a bis 1c: zeigen bekannte Dekorfolien mit Sandwichaufbau,
- Figur 2a: ist eine Teilschnittansicht einer Spritzgießmaschine mit Einschneckenextruder, hier zur Herstellung eines Verschlussdeckels, ohne RFLD-Modul, dargestellt zu Vergleichszwecken
- Figur 2b: ist eine Teilschnittansicht einer Spritzgießmaschine mit Einschneckenextruder, hier zur Herstellung eines Verschlussdeckels mit hinterspritztem RFID-Modul gemäß der vorliegenden Erfindung,
- Figur 3: ist eine Schnittansicht und zeigt einen Kunststoffgegenstand, hier einen Verschlussdeckel, mit hinterspritztem RFID-Modul,
- Figur 4: zeigt ein RFID-Modul mit zentraler Lochung, welches als passiver RFID-Transponder ausgelegt ist, und
- Figuren 5a bis 5d: zeigen Dekorfolien mit Sandwichaufbau und eingebrachtem RFID-Modul.

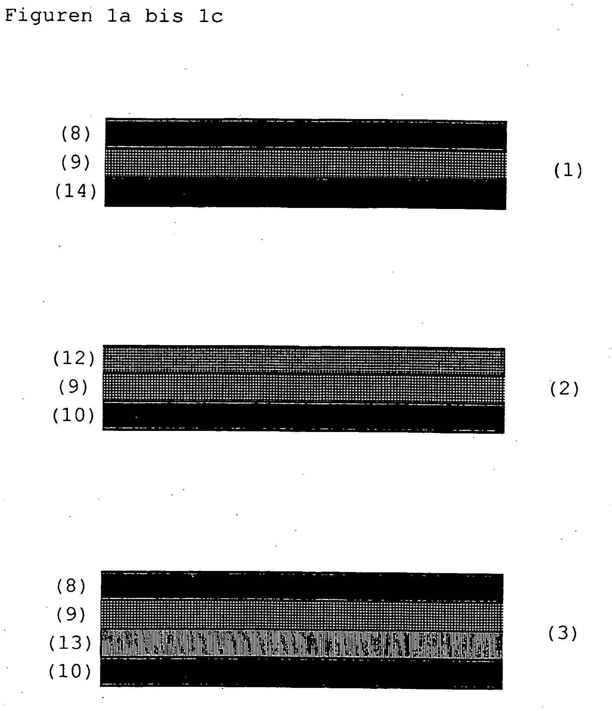

Figur 1a zeigt eine dreischichtige Dekorfolie 1. Die Deckfolie 8, welche aus Polypropylen, hochdichtem Polyethylen, oder einem anderen lichtdurchlässigen Polymer bestehen kann, wird hinterspritzt, was bedeutet, dass die Farbschicht 9, welche auf die Deckfolie 8 aufgebracht wird, sich auf der vom Betrachter abgewandten Seite der Deckfolie 8 befindet, wodurch die Deckfolie 8 gleichzeitig Farbträger und Schutzschicht für die Farbe ist.

Die Deckfolie 8 bildet dabei die dem Betrachter zugewandte Schicht des Sandwichaufbaus. Auf die bedruckte Rückseite wird ein Speziallack 14 aufgebracht, der wärmeresistent ist. Je nach Anwendungsgebiet sind auch untere Schichten mit weiteren Eigenschaften außer Wärmeresistenz denkbar. Die so entstandene Folie ist geeignet, in ein Spritzgießwerkzeug mit eingebracht zu werden, um dauerhaft mit einer gespritzten Form verbunden zu werden.

Fig. 1b zeigt eine Grundfolie 10, die aus Polypropylen, hochdichtem Polyethylen, oder einem anderen Polymer bestehen kann. Auf diese wird eine Farbschicht 9 aufgebracht. Um die Farbschicht 9 zu schützen, wird ein kratzfester Lack 12, der die Funktion einer Versiegelung hat, aufgebracht. Es kommen hierfür prinzipiell alle transparenten Materialien in Betracht, die die gewünschten Eigenschaften erfüllen. Die Eigenschaften können neben Kratzfestigkeit auch Wasserfestigkeit, Säurefestigkeit, UV-Resistenz oder ähnliches sein. Hier bildet der Lack 12 die dem Betrachter zugewandte Seite.

Fig. 1c zeigt eine Dekorfolie 3, bei der die oberste, dem Betrachter zugewandte Schicht von einer Deckfolie 8 gebildet wird. Diese besteht vorzugsweise aus Polypropylen, hochdichtem Polyethylen, oder einem anderen lichtdurchlässigen Polymer. Diese Schicht wird hinterspritzt, was bedeutet, dass die Farbschicht 9, welche auf die Deckfolie 8 aufgebracht wird, sich auf der vom Betrachter abgewandten Seite befindet, wodurch die Deckfolie gleichzeitig Farbträger und Schutzschicht für die Farbe ist. Die bedruckte Folie ist mit der bedruckten Seite auf eine mit Laminatkleber 13 versehene, weitere Schicht 10 aufgetragen.

Diese weitere Schicht 10 besteht vorzugsweise aus Polypropylen, hochdichtem Polyethylen, oder einem anderen geeigneten Polymer. Anstelle des Laminatklebers 13, sind auch andere Materialien denkbar, die in der Lage sind, die untere Schicht 10 mit der bedruckten Deckfolie 8 zu verbinden.

Die zuvor beschriebenen Folien können auf verschiedene Produkte aufgebracht werden während der Herstellung das gespritzten Gegenstands aus Kunststoff entsprechend der Erfindung.

Im folgenden wird zunächst das Aufbringen einer Folie auf einen Verschluss geschildert. Dabei wird auf ein RFID-Modul verzüschtet.

Dieser Beispiel dient nur zu Vergleichszwecken mit der später dargestellter Erfindung.

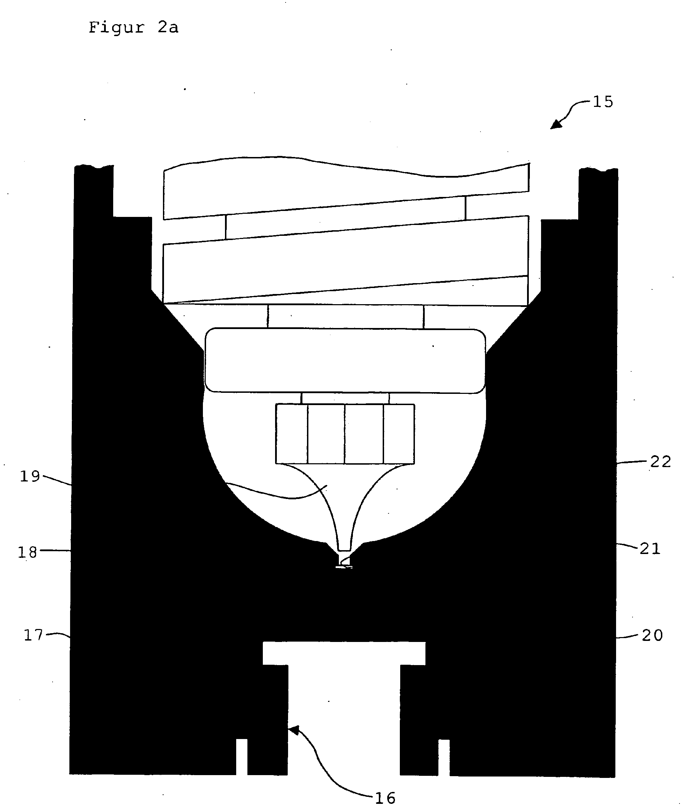

Wie Figur 2a zeigt, kann die Folie in ein Spritzgießwerkzeug 16 einer Spritzgießmaschine 15, beispielsweise einem Einschneckenextruder, eingelegt werden. Das Spritzgießwerkzeug 16 weist die negative Form des zu spritzenden und mit der Folie 21 zu beschichtenden Gegenstands 20 auf und bildet einen formgebenden Hohlraum 17. Der zu beschichtende Gegenstand 20 kann bspw. ein Verschlussdeckel für Behälter, wie bspw. für Flaschen, Kanister, etc. sein. Die Folien 21 werden dabei so in das Spritzgießwerkzeug 16 eingelegt, dass sie an einer Heißkanal-Seite 18 des Spritzgießwerkzeugs 16 anliegen und die später dem Betrachter zugewandte Seite nach außen zeigt.

Das Kunststoffmaterial (nicht dargestellt), im folgenden auch Extrudat genannt, wird in der Spritzgießmaschine 15 mittels Heizung und innerer Reibung aufgeschmolzen und homogenisiert und der für das Durchfließen der Düse 19 notwendige Druck aufgebaut. Nun kann das Extrudat durch die Düse 19 an der Heißkanal-Seite 18 in den formgebenden Hohlraum 17 des Spritzgießwerkzeugs 16 eingedrückt werden, und bildet nach dem Verfestigen den zu beschichtenden Gegenstand 20.

Gleichzeitig mit dem Spritzgießvorgang verbindet sich die Dekorfolie 21 unter Druck fest mit der Oberfläche des eingespritzten Materials. Hilfreich kann es hier sein, wenigstens ein Loch 22 in der Dekorfolie 21 anzubringen, so dass die Düse 19 durch dieses wenigstens eine Loch 22 in der Folie 21 hindurchfährt, um anschließend das Extrudat in die Form 17 einzudrücken und den Verschluss zu hinterspritzen.

Die Dekorfolie 21 wird also in diesem Fall in den formgebenden Hohlraum 17 des Spritzgießwerkzeugs 16 eingebracht und im Zuge des Spritzgießens des Kunststoffgegenstands 20 unter Druck mit einer Oberfläche des Kunststoffgegenstands 20 verbunden.

Die Erfindung ist nicht auf das Spritzgießverfahren mit Einschneckenextruder beschränkt. Es können auch Zweischneckenextruder oder andere Spritzgießverfahren verwendet werden.

Gemäß der Erfindung wird im Zuge des Spritzgießvorgangs ein so genanntes RFID-Modul 25 (Radio Frequency Identification oder Funkerkennung) mit Antenne 26 derart in die Form 17 eingebracht, dass es mit umspritzt wird und abschließend in die Kontur des gespritzten Gegenstands integriert ist.

Die Kontur des gespritzten Gegenstands lässt also das RFID-Modul nicht erkennen. Wenn der Kunststoff entsprechend eingefärbt ist, ist das RFID-Modul von Aussen nicht sichtbar. Dies ist insbesondere bei sicherheitsrelevanten Anwendungen der Fall, bei der das RFID-Modul Identifikationsdaten aussenden kann. Von Aussen ist dann bspw. eine Verschlusskappe mit RFID-Modul nicht von einer ohne RFID-Modul zu unterscheiden.

Durch das gleichzeitige Aufbringen der Folie , liegt das RFID-Modul 25 zwischen dem Kunststoffmaterial des gespritzten Gegenstands 20 und der Folie 21 und somit lagepositioniert und nach Außen durch die Folie 21 geschützt. Somit lassen sich bspw. Kunststoffdeckel mit unlösbar integriertem RFID-Modul 25 fertigen.

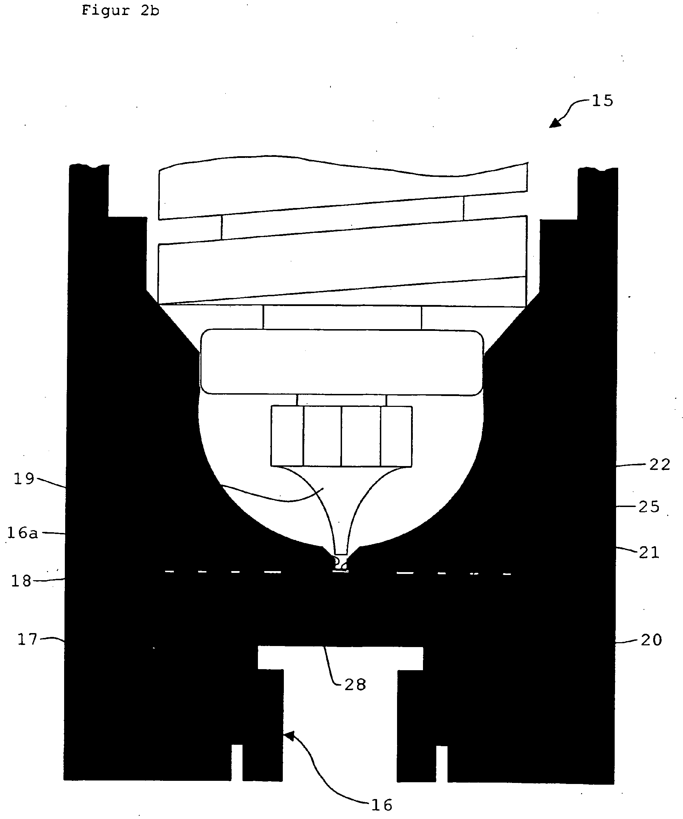

Figur 2b zeigt eine Spritzgießmaschine 15 wie zuvor beschrieben, bei der ein RFID-Modul 25 zusammen mit der Folie 21 in das Spritzgießwerkzeug 16 eingebracht wird, um die Folie 21 mit dem gespritzten Gegenstand zu verbinden und das zwischen dem gespritzten Gegenstand 20 der Folie 21 eingebrachte RFID-Modul 25 durch den Spritzgießvorgang gemäß der obigen Beschreibung unlöslich in den gespritzten Gegenstand 20 zu integrieren. Das RFID-Modul 25 wird dazu bspw. durch Klebeverbindung an der von der später dem Betrachter zugewandten Seite gegenüberliegenden Seite der Dekorfolie 21 mit der Folie 21 verbunden, oder beim Herstellen der Folien 21 in die Sandwichschichten mit integriert.

Das RFID-Modul 25 ist somit mittels der Folie in der Spritzform vorpositioniert.

Die Folie 21 dient also als Trägerfolie für das RFID-Modul 25. Es sind über das Verkleben hinaus auch alle weiteren Möglichkeiten zur fixierenden Positionierung des RFID-Moduls 25 auf den Dekorfolien 21 möglich. Der Sandwichaufbau von Dekorfolien mit RFID-Modul 25 wird später genauer beschrieben.

Das RFID-Modul 25 wird so auf der Dekorfolie 21 im Spritzgießwerkzeug 16 positioniert, dass bspw. seine Antenne konzentrisch um die wenigstens eine Einspritzöffnung 16a des Spritzgießwerkzeugs 16 oder exzentrisch von der wenigstens einen Einspritzöffnung 16a weg angeordnet ist. Das RFID-Modul 25 wird also derart im Spritzgießwerkzeug 16 positioniert, dass die Antenne 26 und der Mikrochip 27 in einer Ebene senkrecht zur Einspritzrichtung von der wenigstens einen Einspritzöffnung 16a weitmöglichst entfernt angeordnet sind, um Schäden durch zu große Hitze oder Drucke zu vermeiden.

Beim Spritzgießvorgang fährt die Düse 19 durch die Einspritzöffnung 16a, durch das Loch 22 der an der Heißkanalseite 18 im Spritzgießwerkzeug 16 eingelegten Dekorfolie 21 und durch ein Loch 28 des an der Dekorfolie 21 befestigten RFID-Moduls 25 hindurch, drückt das Extrudat in den formgebenden Hohlraum 17 des Spritzgießwerkzeugs 16 ein und hinterspritzt aufgrund des hohen Drucks die mit dem RFID-Modul 25 versehene Dekorfolie 21. Dadurch wird die Folie 21 fest mit dem gespritzten Gegenstand 20 verbunden, das RFID-Modul 25 zwischen Folie 21 und gespritzten Gegenstand 20 eingebracht und das RFID-Modul 25 ferner unlöslich in den gespritzten Gegenstand 20 integriert.

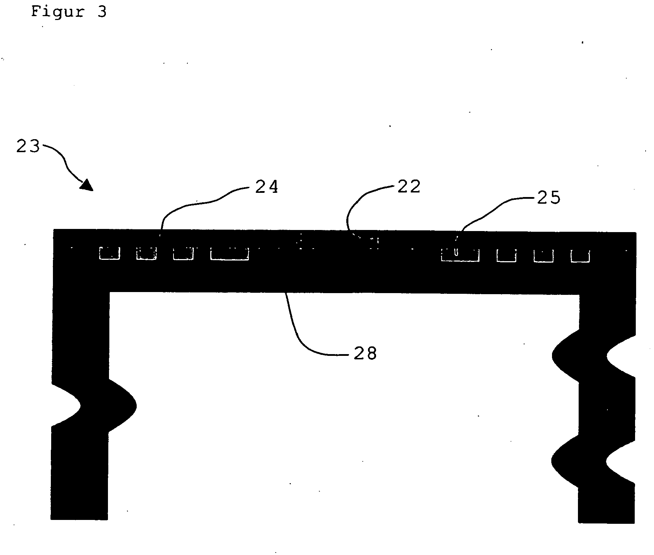

Figur 3 zeigt beispielhaft und vereinfacht einen Verschlussdeckel 23 mit Dekorfolie 24 und hinterspritztem RFID-Modul 25 nach dem Spritzgießvorgang, wobei das RFID-Modul 25 zwischen dem gespritzten Verschlussdeckel 23 und der Dekorfolie 24 liegt, und die Dekorfolie 24 sowie das RFID-Modul 25 fest mit der Oberfläche des Verschlussdeckels 23 verbunden sind. Durch das Hinterspritzen der Folie 24 und des RFID-Moduls 25 liegt das RFID-Modul 25 zum einen vor äußeren Einflüssen geschützt zwischen der Folie 24 und dem gespritzten Gegenstand 23. Zum anderen ist das RFID-Modul 25 untrennbar in den gespritzten Gegenstand 20, 23 integriert, wodurch die äußere Form des Gegenstands 20, 23 nicht durch das RFID-Modul 25 und auch die Folie 24 beeinflusst wird und das RFID-Modul 25 bei nicht-transparentem Kunststoffmaterial nicht von außen sichtbar ist. Beispielsweise ein Kunststoffdeckel 24 mit integriertem RFID-Modul 25 ist somit aufgrund seiner Form nicht mehr von einem Deckel 24 ohne RFID-Modul 25 zu unterscheiden.

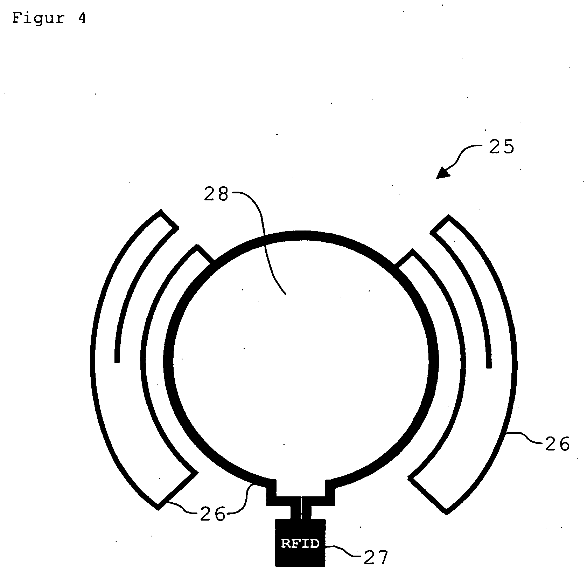

Figur 4 zeigt ein solches RFID-Modul 25, das eine vorzugsweise konzentrisch angeordnete Antenne 26 sowie einen Mikrochip 27 umfasst. Durch die konzentrische Anordnung der Antenne 26 ist das RFID-Modul 25 mit einer zentrale Lochung 28 versehen, durch die die Düse 19 beim Spritzgießvorgang hindurchfahren kann. Das RFID-Module 25 hat vorzugsweise eine Etikett-, Chip- oder Tagform und hat die Funktion eines passiven, berührungslos kontaktierbaren Transponders.

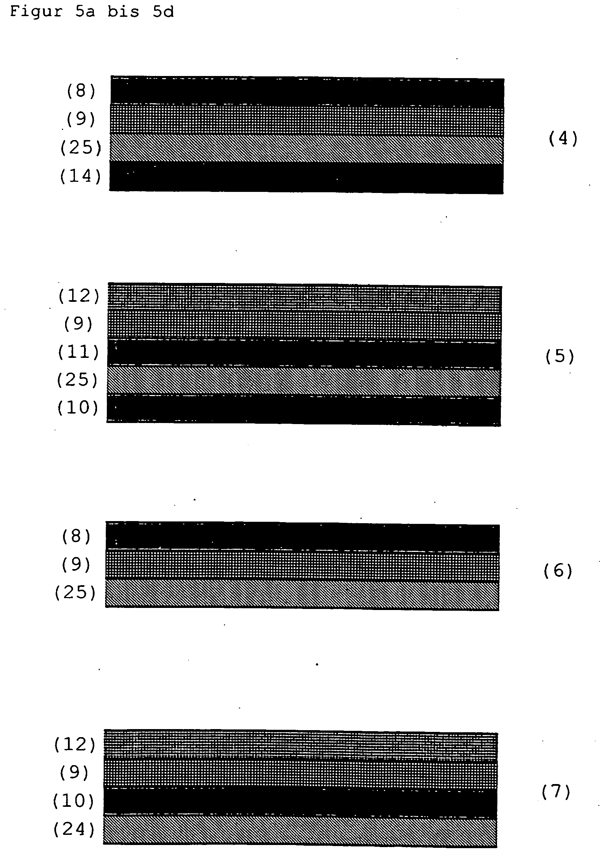

Figuren 5a bis 5d zeigen jeweils eine mehrschichtige Dekorfolie mit eingebrachtem RFID-Modul 25.

Figur 5a zeigt eine vierschichtige Dekorfolie 4. Der Aufbau der Dekorfolie 4 entspricht im Wesentlichem dem der Dekorfolie 1. Die Deckfolie 8, welche aus Polypropylen, hochdichtem Polyethylen, oder einem anderen lichtdurchlässigen Polymer bestehen kann, wird hinterspritzt, die Farbschicht 9 befindet sich also auf der vom Betrachter abgewandten Seite der Deckfolie 8, wodurch die Deckfolie 8 gleichzeitig Farbträger und Schutzschicht für die Farbe ist. Die Deckfolie 8 bildet dabei die dem Betrachter zugewandte Schicht des Sandwichaufbaus.

Zwischen die auf der Rückseite der Deckfolie 8 befindlichen Farbschicht 9 und dem wärmeresistenten Speziallack 14 wird das RFID-Modul 25 eingebracht, so dass die zentrale Lochung 28 des RFID-Moduls 25 konzentrisch um das mindestens eine Loch 22 der Dekorfolie 4 angeordnet ist. Je nach Anwendungsgebiet sind auch untere Schichten mit weiteren Eigenschaften außer Wärmeresistenz denkbar. Die so entstandene Folie ist geeignet, in ein Spritzgießwerkzeug mit eingebracht zu werden, um dauerhaft mit einer gespritzten Form 20 verbunden zu werden.

Fig. 5b zeigt eine Grundfolie 10, die aus Polypropylen, hochdichtem Polyethylen, oder einem anderen Polymer bestehen kann. Auf diese wird das RFID-Modul 25 wie oben beschrieben angeordnet. Eine Zwischenfolie 11 wird auf dem RFID-Modul 25 und der Grundfolie 10 angebracht, so dass das RFID-Modul 25 zwischen der Grundfolie 10 und der Zwischenfolie 11 angeordnet ist. Diese weitere Schicht 11 besteht vorzugsweise aus Polypropylen, hochdichtem Polyethylen, oder einem anderen geeigneten Polymer. Auf der Zwischenfolie 11 ist eine Farbschicht 9 auf der dem RFID-Modul 25 gegenüberliegenden Seite aufgebracht. Um die Farbschicht 9 zu schützen, wird ein kratzfester Lack 12, der die Funktion einer Versiegelung hat, aufgebracht. Es kommen hierfür prinzipiell alle transparenten Materialien in Betracht, die die gewünschten Eigenschaften erfüllen. Die Eigenschaften können neben Kratzfestigkeit auch Wasserfestigkeit, Säurefestigkeit, UV-Resistenz oder ähnliches sein. Hier bildet der Lack die dem Betrachter zugewandte Seite.

Fig. 5c und Fig. 5d zeigen eine Dekorfolie 6, 7, deren Unterschied zu den Dekorfolien 4, 5 darin liegt, dass sie keinen Sandwich-Abschluss besitzen. Dekorfolie 6 entspricht also dem Aufbau von Dekorfolie 4 ohne die wärmeresistente Speziallack-Schicht 14. Dekorfolie 7 entspricht dem Aufbau von Dekorfolie 5 ohne die Grundfolie 10.

Nach der Erfindung werden bereitgestellt gespritzte Gegenstände aus Kunststoff (23), aufweisend eine mit dem Kunststoffmaterial der Gegenstands hintersprützte Folie (24) und ein zwischen der Folie (24) und dem gespritzten Kunststoffmaterial des Gegenstands vorgesehenes RFID-Modul (25) wie in Anspruch 1 definiert.

Es können beispielsweise Verschlussdeckel 23 aus Kunststoff mit Folie 24 und RFID-Modul 25 hergestellt werden.

### Bezugszeichenliste:

(1) Dekorfolie
(2) Dekorfolie
(3) Dekorfolie
(4) Dekorfolie
(5) Dekorfolie
(6) Dekorfolie
(7) Dekorfolie
(8) Deckfolie
(9) Druckfarbschicht
(10) Grundfolie
(11) Zwischenfolie
(12) Kratzfester Lack / Versiegelung
(13) Laminatkleber
(14) Wärmeresistenter Lack
(15) Spritzgießmaschine
(16) Spritzgießwerkzeug
(16a)Einspritzöffnung
(17) formgebender Hohlraum
(18) Heißkanal-Seite
(19) Düse
(20) gespritzter und zu beschichtender Gegenstand
(21) mehrschichtige Deckorfolie in Spritzgießwerkzeug eingelegt
(22) Loch in Dekorfolie
(23) Deckel mit Dekorfolie
(24) Dekorfolie auf Deckel
(25) RFID-Modul / RFID-Transponder
(26) Antenne
(27) Mikrochip
(28) zentrale Lochung in RFID-Modul

## Patentansprüche

1. Gespritzter Gegenstand aus Kunststoff (23), aufweisend eine mit dem Kunststoffmaterial des Gegenstands hinterspritzte Folie (24) und ein zwischen der Folie (24) und dem gespritzten Kunststoffmaterial des Gegenstands vorgesehenes RFID-Modul (25), wobei das RFID-Modul (25) Antennen (26) aufweist; wobei:
die Folie (24) gelocht ist,
das RFID-Modul (25) ein Loch (28) aufweist, und
das Loch (28) des RFID-Moduls (25) konzentrisch um das Loch (22) der Folie (24) angeordnet ist, so dass sich das Material für den Spritzgießvorgang durch das Loch der Folie (24) und das Loch (28) des RFID-Moduls (25) hindurch einbringen ließ.

2. Gespritzter Gegenstand nach Anspruch 1,
wobei die Folie einen Sandwichaufbau aufweist mit, von der Sichtseite gesehen, den folgenden Schichten:
- eine Deckfolie (8) mit einer rückseitigen Bedruckung (9)
- eine Laminatkleberschicht (13) und
- darunter eine weitere Polymerfolie (10), oder eine weitere Lackschicht (14), wobei das RFID-Modul (25) zwischen der Polymerfolie (14) und der Farbschicht (9) eingebracht ist.

3. Gespritzter Gegenstand nach Anspruch 2,
**dadurch gekennzeichnet,**
**dass** die Deckfolie (8) aus Polypropylen, hochdichtem Polyethylen oder einem anderen lichtdurchlässigen, geeigneten Polymer besteht.

4. Gespritzter Gegenstand nach einem der Ansprüche 1 bis 3,
wobei Antennen (26) des RFID-Moduls (25) konzentrisch angeordnet sind und das Loch (28) in Form einer zentralen Lochung bilden.

5. Verfahren zum Versehen eines gespritzten Gegenstands aus Kunststoff mit einer Folie und mit einem RFID-Modul,
wobei die Folie (21), die ein Loch (22) aufweist, durch das die Düse beim Spritzgießvorgang hindurchfahren kann, in einen formgebenden Hohlraum (17) eines Spritzgießwerkzeugs (16) eingelegt und im Zuge des Spritzgießens des Gegenstands (20) mit einer Oberfläche des entstehenden Gegenstands (20) verbunden wird, und
wobei durch den Spritzgießvorgang ein RFID-Modul (25) mit Antennen, das ein Loch (28) aufweist, durch das die Düse beim Spritzgießvorgang hindurchfahren kann, zwischen der Folie (21, 24) und dem Kunststoffmaterial des gespritzten Gegenstands (20, 23) eingebracht wird,
wobei das Loch (28) des RFID-Moduls (25) konzentrisch um das Loch (22) der Folie (24) angeordnet ist, so dass das Kunststoffmaterial für den Spritzgießvorgang durch das Loch (22) der Folie (24) und das Loch (28) des RFID-Moduls (25) hindurch eingebracht wird, und die Folie und das RFID-Modul mit dem Kunststoffmaterial hinterspritzt wird.

6. Verfahren nach Anspruch 5,
wobei das RFID-Modul (25) durch den Spritzgießvorgang unlöslich in den gespritzten Gegenstand (20, 23) integriert wird, so dass die äußere Form des gespritzten Gegenstands (20, 23) nicht beeinflusst wird.

7. Verfahren nach einem der Ansprüche 5 oder 6,
wobei die Folie (21) so in einen formgebenden Hohlraum (17) eines Spritzgießwerkzeugs (16) eingebracht wird, und wenn Kunststoffmaterial eingespritzt wird, die Oberseite (8, 12) der Folie (21) die Außenseite des gespritzten Gegenstands (20) bildet.

8. Verfahren nach einem der Ansprüche 5 bis 7,
wobei die gelochte Folie (21) an einer Heißkanal-Seite (18) in dem formgebenden Hohlraum (17) des Spritzgießwerkzeugs (16) eingebracht ist.

9. Verfahren nach einem der Ansprüche 5 bis 8,
wobei Antennen (26) des RFID-Moduls (25) konzentrisch angeordnet sind und das Loch (28) in Form einer zentralen Lochung bilden.

## Claims

1. An injection-moulded article made of synthetic material (23), comprising a film (24) back-moulded with the synthetic material of the article and an RFID-module (25) provided between the film (24) and the injection-moulded synthetic material of the article, wherein the RFID-module (25) comprises antennas (26); wherein:
- the film (24) is perforated;
- the RFID-module (25) provides a perforation (28); and
- the perforation (28) of the RFID-module (25) is arranged concentrically around the perforation (22) of the film (24),
so that the material for the injection-moulding process can be introduced through the perforation in the film (24) and the perforation (28) of the RFID-module (25).

2. The injection-moulded article according to claim 1,
wherein the film provides a sandwich structure with the following layers, viewed from the exposed surface:
- a cover film (8) with printing (9) on the reverse;
- laminate-adhesive layer (13); and
- beneath this, a further polymer film (10), or a further varnish layer (14),
wherein the RFID module (25) is introduced between the polymer film (14) and the ink layer (9).

3. The injection-moulded article according to claim 2,
**characterised in that**
the cover film (8) is made from polypropylene, high-density polyethylene or another suitable light-permeable polymer.

4. The injection-moulded article according to any one of claims 1 to 3,
wherein antennas (26) of the RFID-module (25) are arranged concentrically, and embody the perforation (28) in the shape of a central perforation.

5. A method for providing an injection-moulded article made of synthetic material with a film and an RFID-module,
wherein the film (21), which provides a perforation (22) through which the nozzle can pass during the injection-moulding process, is placed in a hollow forming cavity (17) of an injection-moulding tool (16) and, during the course of the injection-moulding of the article (20) is connected to a surface of the resulting article (20), and wherein, through the injection-moulding process, an RFID module (25) with antennas, which provides a perforation (28) through which the nozzle can pass during the injection-moulding process, is introduced between the film (21, 24) and the synthetic material of the injection-moulded article (20, 23),
wherein the perforation (28) of the RFID-module (25) is arranged concentrically around the perforation (22) of the film (24), so that the synthetic material for the injection-moulding process is introduced through the perforation (22) of the film (24) and the perforation (28) of the RFID-module (25), and the film and the RFID-module are back-moulded with the synthetic material.

6. The method according to claim 5,
wherein the module (25) is integrated in an inseparable manner into the injection-moulded article (20, 23) by the injection-moulding process, so that the external shape of the injection-moulded article (20, 23) is not influenced.

7. The method according to any one of claims 5 or 6,
wherein the film (21) is introduced into a hollow forming cavity (17) of an injection-moulding tool (16) in such a manner, and if synthetic material is injected, the upper side (8, 12) of the film (21) forms the outer side of the injection-moulded article (20).

8. The method according to any one of claims 5 to 7,
wherein the perforated film (21) is introduced into the hollow forming cavity (17) of the injection-moulding tool (16) at a hot-runner side (18).

9. The method according to any one of claims 5 to 8,
wherein antennas (26) of the RFID-module (25) are arranged concentrically, and embody the perforation (28) in the shape of a central perforation.

## Revendications

1. Objet moulé par injection en matière plastique (23), présentant un film (24) surmoulé par injection avec la matière plastique de l'objet et un module RFID (25) disposé entre le film (24) et la matière plastique surmoulée par injection de l'objet, dans lequel le module RFID (25) présente des antennes (26) ; dans lequel :
- le film est perforé,
- le module RFID (25) présente un trou (28), et
- le trou (28) du module RFID (25) est disposé de manière concentrique autour du trou (22) du film (24) de manière à ce que, pour le processus de moulage par injection, la matière est susceptible d'être introduite à travers le trou du film (24) et le trou (28) du module RFID (25).

2. Objet moulé par injection selon la revendication 1,
dans lequel le film présente une structure en sandwich avec, vu depuis le côté visible, les couches suivantes :
- un film de recouvrement (8) avec une impression (9) sur le côté arrière,
- une couche de colle stratifiée (13), et
- en-dessous, un autre film de polymère (10) ou une autre couche de laque ou vernis (14), le module RFID (25) étant mis en place entre le film de polymère (14) et la couche de couleur (9).

3. Objet moulé par injection selon la revendication 2,
**caractérisé en ce que**
le film de recouvrement (8) est constituée de polypropylène, de polyéthylène à haute densité ou d'un autre polymère approprié translucide.

4. Objet moulé par injection selon l'une des revendications 1 à 3,
dans lequel des antennes (26) du module RFID (25) sont disposées de manière concentrique et forment le trou (28) sous la forme d'une perforation centrale.

5. Procédé pour munir un objet en matière plastique moulé par injection d'un film et d'un module RFID,
dans lequel le film (21), qui présente un trou (22) à travers lequel la buse peut passer lors du processus de moulage par injection, est placé dans une cavité (17), qui est une cavité de mise en forme, d'un outil de moulage par injection (16) et, au cours du moulage par injection de l'objet (20), est reliée avec une surface de l'objet (20) en formation, et
dans lequel, par le processus de moulage par injection, un module RFID (25) avec des antennes, qui présente un trou (28) par lequel la buse peut passer lors du processus de moulage par injection, est mis en place entre le film (21, 24) et la matière plastique de l'objet moulé par injection (20, 23),
dans lequel le trou (28) du module RFID (25) est disposé de façon concentrique autour du trou (22) du film (24), de manière à ce que, pour le processus de moulage par injection, la matière plastique est susceptible d'être introduite à travers le trou (22) du film (24) et le trou (28) du module RFID (25), et le film et le module RFID sont surmoulés par injection avec la matière plastique.

6. Procédé selon la revendication 5,
dans lequel le module RFID (25) est intégré par le processus de moulage par injection de manière inséparable dans l'objet moulé par injection (20, 23), de sorte que la forme extérieure de l'objet moulé par injection (20, 23) n'est pas influencée.

7. Procédé selon l'une des revendications 5 ou 6,
dans lequel le film (21) est mis en place dans une cavité (17), qui est une cavité de mise en forme, d'un outil de moulage par injection (16) de telle sorte, et lorsque de la matière plastique est injectée, la face supérieure (8, 12) du film (21) forme le côté extérieur de l'objet moulé par injection (20).

8. Procédé selon l'une des revendications 5 à 7,
dans lequel le film (21) troué est mis en place dans la cavité de mise en forme (17) de l'outil de moulage par injection (16) dans un côté de canal chauffé (18).

9. Procédé selon l'une quelconque des revendications 5 à 8,
dans lequel des antennes (26) du module RFID (25) sont disposées de manière concentrique et forment le trou (28) sous la forme d'une perforation centrale.
